# EUROPEAN PATENT APPLICATION

(11) **EP 1 801 498 A1**
(43) Date of publication of application: **27.06.2007**
(21) Application number: 05077974.3
(22) Date of filing: 23.12.2005
(51) Int. Cl.: F23D 21/00, F23C 6/04, F23D 14/66

(54) **Method for generating radiation**

(71) Applicant: Nederlandse Organisatie voor Toegepast-Natuurwetenschappelijk Onderzoek TNO, 2628 VK Delft (NL)
(72) Inventor: Alcott, Gregory Robert, Liphook hants, GU30 7PX (GB); Zijp, Johannes Petrus, 5062 AT Oisterwijk (NL); Simonis, Frank, 5688 RX Oirschot (NL)
(74) Representative: Winckels, Johannes Hubertus F.

(57) **Abstract**

The present invention provides a method for generating radiation in which method a methane-containing gas is at least partly converted into carbon soot and/or higher hydrocarbons that comprise at least two carbon atoms, after which the gaseous mixture comprising the soot and/or higher hydrocarbons so obtained is burnt with an oxygen-containing gas thereby generating radiation. The invention further relates to a method for heating gas using radiation thus generated, and gas burner to generate radiation.

## Description

The present invention relates to a method for generating heat, a method for heating glass using radiation generated with such a process, and gas burner for generating radiation.

The glass melting step is a very energy intensive part of the glass production process. Since, natural gas burners are usually used to generate the radiation required to produce glass melts, much effort have been made to develop glass-melt furnaces that generate radiation in a more energy-effective manner. To establish this, natural gas burners have, for instance, been developed wherein the natural gas is brought into contact with inductively generated plasmas, plasma arcs or dielectric barrier discharges. Such systems have, however, the disadvantages that they are as such expensive, that they require much energy, often 1000 Watt or more, to produce the required radiation, and that the electrode surfaces applied become rapidly contaminated.

Object of the present invention is to provide a method which deals with these disadvantages.

Surprisingly, it has now been found that this can be established if a methane-containing gas is converted in a particular way into carbon soot and/or higher hydrocarbons, and the product so obtained is burnt with an oxygen-containing gas to generate the radiation.

Accordingly, one embodiment of the present invention relates to a method for generating radiation in which method a methane-containing gas is contacted with a heated element whereby the methane-containing gas is at least partly converted into carbon soot and/or higher hydrocarbons that comprise at least two carbon atoms, after which the gaseous mixture comprising the soot and/or higher hydrocarbons so obtained is burnt with an oxygen-containing gas thereby generating radiation.

Another embodiment of the present invention relates to a method for generating radiation in which method a methane-containing gas is contacted with radicals and/or active species whereby the methane-containing gas is at least partly converted into carbon soot and/or higher hydrocarbons that comprise at least two carbon atoms, after which the gaseous mixture comprising the soot and/or higher hydrocarbons so obtained is burnt with an oxygen-containing gas thereby generating radiation.

The methods according to the present invention have the advantage that both the temperature and radiation output of a natural gas burner can be increased, whereas at the same time a much smaller input of electrical energy is needed to establish this. In this respect it is noted that, for instance, plasma arcs normally require an energy input of about 1000 Watt, whereas the present invention requires less than 200 Watt. Hence, the methods according to the present invention constitute considerable improvements over the known methods.

The heated element to be used in the method according to the present invention is preferably a heated catalytic element.

The methane-containing gas to be used in accordance with the present invention is preferably contacted with the radicals and/or the active species at a temperature in the range of from 20 to 200 °C.

Preferably, the methane-containing gas is contacted with the radicals and/or the active species at a pressure in the range of from 1 to 2 bar.

The methane-containing gas can suitably be contacted with the radicals and/or the active species for a period of time in the range of from 0.01 to 1 seconds.

In a preferred embodiment of the present invention, the radicals and/or active species have been generated from a gas stream under application of heat. Preferably, the radicals and/or active species are generated by contacting the gas stream with a heated catalytic element.

Suitably, the gas stream is contacted with the heated catalytic element at a temperature in the range of from 1000 to 3000°C.

Preferably, the gas stream nitrogen, hydrogen, a noble gas or a mixture thereof.

The catalytic element with which the methane-containing gas is contacted or by means of which the radicals and/or active species are generated preferably comprises a material which is selected from the group consisting of tungsten, molybdenum, ruthenium, hafnium, iridium, niobium, osmium, rhenium, tantalum, SiC, carbon, technetium or mixtures thereof.

The oxygen-containing gas used in accordance with the present invention comprises preferably air.

Preferably, the methane-containing gas to be used according to the present invention comprises natural gas.

In the method according to the present invention the methane-containing gas (A) and the radicals an/or active species supplying gas (B) are preferably applied in a weight ratio of 5-100 (A/B).

Preferably, the methods according to the present invention are carried out in a gas burner, whereby the methane-containing gas is introduced into the gas burner at a flow in the range of from 1 to 100 slm.

The gas stream from which the radicals and/or active species are generated is preferably introduced into the gas burner at a flow rate in the range of from 0.1 to 5.0 slm.

The catalytic element to be used in the methods according to the present invention is preferably coated or shielded with an inorganic high-temperature resistant material. More preferably, the catalytic element is coated with a TiN intermediate layer and a SiC top layer.

Suitably, the catalytic element has the form of a wire.

The present invention also relates to a method for heating glass, in which method glass is heated by means of radiation generated in accordance with a method according to the present invention. Usually the heating will be carried out in such a way that the glass melts.

In addition, the present invention also relates to a gas burner to generate radiation, which burner comprises a heat source, a mixing chamber inside the burner, inlet means to introduce a methane-containing gas into the burner, an element that can be heated which is located inside the burner, inlet means to introduce an oxygen-containing gas into the burner, and outlet means allowing the product to be formed to leave the burner.

The element to be heated in such a gas burner is preferably a catalytic element. Suitably, said element has the form of a wire.

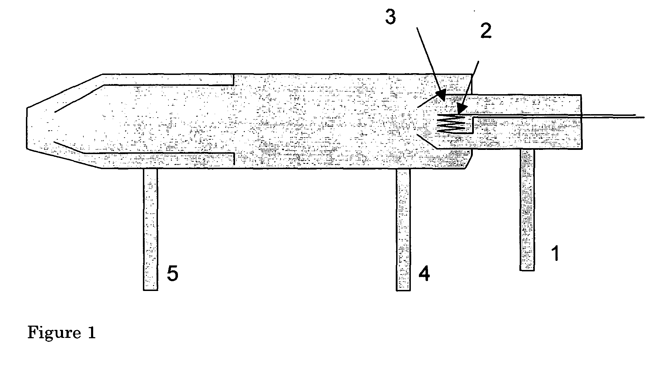

In Figure 1 a gas burner in accordance with the present invention has been depicted. The gas burner comprises an inlet (1) for introducing a gas stream which is cracked and/or activated over a heated catalytic element (2) in mixing chamber (3). The radicals and/or active species so obtained are brought into contact with the methane-containing gas which is introduced by means of inlet (4) as a result of which at least part of the methane-containing gas is converted into carbon soot and/or higher hydrocarbons that comprise at least two carbon atoms. The gaseous mixture so obtained, and comprising the soot and/or higher hydrocarbons, is then burnt with an oxygen-containing gas to generate radiation, whereby the oxygen-containing gas is introduced in the gas burner via inlet (5).

### Example

In accordance with the present invention a torch has been equipped with a heated filament. The filament was heated with a power of approximately 20 Watt until the filament was yellow-hot. Methane was then passed over the filament directly without use of an intermediary gas or radicals thereof. The

methane flow used was in the order of 10 slm. The oxygen supply was set in such a way that a neutral blue-burning flame of several decimeters length was obtained. When the filament was turned on, the effect of the methane cracking and conversion became apparent by the fact that the resulting flame changed colour from blue to yellow.

## Claims

1. A method for generating radiation in which method a methane-containing gas is contacted with a heated element whereby the methane-containing gas is at least partly converted into carbon soot and/or higher hydrocarbons that comprise at least two carbon atoms, after which the gaseous mixture comprising the soot and/or higher hydrocarbons so obtained is burnt with an oxygen-containing gas thereby generating radiation.

2. A method according to claim 1, wherein the heated element is a heated catalytic element.

3. A method for generating radiation in which method a methane-containing gas is contacted with radicals and/or active species whereby the methane-containing gas is at least partly converted into carbon soot and/or higher hydrocarbons that comprise at least two carbon atoms, after which the gaseous mixture comprising the soot and/or higher hydrocarbons so obtained is burnt with an oxygen-containing gas thereby generating radiation.

4. A method according to claim 3, wherein the methane-containing gas is contacted with the radicals and/or the active species at a temperature in the range of from 20 to 200 °C.

5. A method according to claim 3 or 4, wherein the methane-containing gas is contacted with the radicals and/or the active species at a pressure in the range of from 1 to 2 bar.

6. A method according to any one of claims 3-5, wherein the methane-containing gas is contacted with the radicals and/or the active species for a period of time in the range of from 0.01 to 1 seconds.

7. A method according to any one of claims 3-6, wherein the radicals and/or active species have been generated from a gas stream under application of heat.

8. A method according to claim 7, wherein the radicals and/or active species are generated by contacting the gas stream with a heated catalytic element.

9. A method according to claim 8, wherein the gas stream is contacted with the catalytic element at a temperature in the range of from 1000 to 3000°C.

10. A method according to any one of claims 2, 8 or 9, wherein the catalytic element comprises a material which is selected from the group consisting of tungsten, molybdenum, ruthenium, hafnium, iridium, niobium, osmium, rhenium, tantalum, SiC, carbon, technetium or mixtures thereof.

11. A method according to any one of claims 7-10, wherein the gas stream comprises nitrogen, hydrogen, a noble gas or a mixture thereof.

12. A method according to any one of claims 1-11, wherein the oxygen-containing gas comprises air.

13. A method according to any one of claims 1-12, wherein the methane-containing gas comprises natural gas.

14. A method according to any one of claims 3-13, wherein the methane-containing gas (A) and the radicals an/or active species supplying gas (B) are applied in a weight ratio of 5-100 (A/B).

15. A method according to any one of claims 1-14, which method is carried out in a gas burner, and whereby the methane-containing gas is introduced into the gas burner at a flow in the range of from 1 to 100 slm.

16. A method according to any one of claims 7-15, wherein the gas stream is introduced into the gas burner at a flow rate in the range of from 0.1 to 5.0 slm.

17. A method according to any one of claims 1-16, wherein the catalytic element is coated or shielded with an inorganic high-temperature resistant material.

18. A method according to any one of claims 1-17, wherein the heated catalytic element is coated with a TiN intermediate layer and a SiC top layer.

19. A method according to any one of claims 1-18, wherein the heated catalytic element has the form of a wire.

20. A method for heating glass, in which method glass is heated by means of radiation generated in accordance with any one of claims 1-19.

21. A gas burner to generate radiation, which burner comprises a heat source, a mixing chamber inside the burner, inlet means to introduce a methane-containing gas into the burner, an element that can be heated which is located inside the burner, inlet means to introduce an oxygen-containing gas into the burner, and outlet means allowing the product to be formed to leave the burner.

22. A burner according to claim 21, wherein the element to be heated is a catalytic element.

23. A burner according to claim 21 or 22, wherein the element has the form of a wire.
